# FASCICULE DE BREVET EUROPEEN

(11) **EP 1 548 457 B1**
(45) Date de publication et mention de la délivrance du brevet: **19.07.2006**
(21) Numéro de dépôt: 04292919.0
(22) Date de dépôt: 08.12.2004
(51) Int. Cl.: G01S 5/14, G01S 5/00, G08B 25/01, G08G 1/123, H04Q 7/38

(54) **Localisation de terminaux radio mobiles**
Ortsbestimmung von Mobilfunkendgeräten
Localisation of mobile radio-terminals

(30) Priorité: 22.12.2003 FR 0315181
(43) Date de publication de la demande: 29.06.2005
(73) Titulaire: EADS Secure Networks, 78180 Montigny le Bretonneux (FR)
(72) Inventeur: Rousseau, Frédéric, 78180 Montigny Le Bretonneux (FR)
(74) Mandataire: Verdure, Stéphane

(56) Documents cités:
- WO-A-01/28266
- DE-C- 10 064 978
- US-A- 5 982 322
- US-B1- 6 275 164

## Description

La présente invention se rapporte de manière générale aux systèmes de radiocommunications mobiles, et plus particulièrement à un dispositif et un procédé de localisation de terminaux mobiles, permettant à un tiers de connaître la position géographique d'un terminal mobile, puis d'entrer éventuellement en communication avec lui.

Le besoin de localisation des personnes ou des objets peut être classé en plusieurs catégories, selon que l'équipement demandeur de l'information de localisation et celui qui doit être localisé sont identiques ou non. Dans une première catégorie se trouvent par exemple les équipements récepteurs passifs des systèmes tels que le GPS, GALILEO, ou LORAN-C, qui permettent de déterminer localement la propre position dudit équipement récepteur. Dans une seconde catégorie, le demandeur de l'information de localisation est un utilisateur distant qui tire parti d'émissions radio émises par l'équipement à localiser. L'invention relève de cette seconde catégorie et l'équipement concerné est un terminal mobile d'un système de radiocommunications.

L'invention trouve des applications dans les systèmes de radiocommunications mobiles professionnelles (ou systèmes PMR, de l'anglais "Professional Mobile Radio"), tels que définis par l'Union Internationale des Télécommunications (UIT) dans son rapport ITU-R M.2014 « Report on terrestrial digital mobile systems with high spectrum effectiveness for dispatch traffic », ou tels que définis par la "Telecommunications Industry Association (TIA)" américaine pour l'"Association of Public-Safety Communications Officers (APCO)", ou tels que définis par l'Institut Européen de Normalisation des Télécoms (ou ETSI, pour "European Telecommmunications Standards Institute") au travers de la norme TETRA, ou encore par des fora d'industriels tels que le forum TETRAPOL (www.tetrapol.com) ou le projet MESA (www.projectmesa.org).

Dans le contexte envisagé ici, de tels systèmes PMR sont ceux utilisés en particulier dans le domaine maritime (par des plaisanciers, des marins et des gardes côtes, etc.) dans le domaine aéroportuaire par le personnel au sol et par le personnel navigant, dans le domaine de la surveillance des frontières et du territoire, dans le domaine d'expéditions sportives ou scientifiques dans des zones reculées, ainsi que par des forces de secours aux personnes en détresse.

L'homme du métier comprendra que, bien que la description de modes de réalisation de l'invention soit donnée ci-après avec un système PMR terrestre, l'invention s'applique également aux systèmes de radiocommunications maritimes, à la radio aéronautique, et à d'autres systèmes de radiocommunications fixes ou mobiles, civils ou militaires tactiques, en particulier dans les bandes de fréquences HF, VHF ou UHF.

Le dispositif proposé trouve aussi des applications de radiolocalisation dans les systèmes de télécommunications ad-hoc, c'est-à-dire sans infrastructure de réseaux, utilisant par exemple des technologies WLAN ("Wireless Local Area Network"), telles que selon le standard IEEE 802.11g ou des technologies TDMA auto-organisées, telles que selon le standard ETSI EN 301 842.

Le dispositif proposé trouve un usage de sécurité publique, pour la détection de situations de détresse et l'organisation des secours, par exemple dans le cadre du concept ISTOS ("Integrated Space Technologies Operational System" pour les applications des technologies spatiales combinées) promu par l'agence spatiale européenne (ESA, pour "European Space Agency"), mis en oeuvre par un consortium comprenant les sociétés ASTRIUM, AVANTI et EADS TELECOM, et combinant des technologies de radiocommunications terrestres et des technologies spatiales.

Il trouve également un usage pour la localisation d'activités humaines terrestres dans des zones isolées, tels que les déserts, steppes et montagnes ou plate-formes maritimes. En particulier, il s'applique pour la sécurité du transport maritime par référence aux exigences de la convention SOLAS ("International Convention for Safety Of Life At Sea" de l'Organisation Maritime Internationale) et pour le transport aérien concernant les radiobalises de détresse.

Il complète le service offert au public lors de la libéralisation par la FCC ("Federal Communications Commission") de l'usage de radiobalises personnelles sur le territoire américain, applicable à partir du 1^{er} Juillet 2003 pour les applications de radiobalise pour le grand public.

Un système de radiocommunications mobiles comprend généralement, d'une part une infrastructure fixe avec un réseau d'acheminement et d'exploitation et d'autre part des terminaux mobiles fournis aux utilisateurs.

Les terminaux mobiles peuvent offrir aux utilisateurs différents modes de communications, comprenant des services de communication en mode relayé ou mode réseau ("Network Mode"), et des services de communication en mode direct.

Les services de communication en mode relayé sont disponibles lorsque des terminaux mobiles sont à portée radioélectrique du réseau.

Les services de communication en mode direct sont disponibles pour des communications radio directes entre terminaux mobiles, c'est-à-dire sans passer par une quelconque infrastructure. Le mode direct est parfois nommé mode « talkie-walkie » ou mode auto-organisé. Dans le contexte de l'interopérabilité entre les organisations de sécurité publique américaines, une communication en mode direct peut être aussi qualifiée de communication d'aide ("canal d'aide mutuelle").

De plus, un terminal mobile peut être simultanément impliqué dans une communication en mode direct et effectuer des transactions en mode relayé. Ce mode hybride est parfois appelé mode « dual watch ».

L'implication d'un terminal mobile dans une communication en mode direct est généralement initiée manuellement par l'utilisateur. Elle peut être révoquée à tout instant et n'est pas connue des tiers. Alternativement elle peut résulter d'un paramétrage prédéfini. Ainsi, le canal radio pour une communication en mode direct utilisé en cas de détresse peut être prédéfini arbitrairement et connu des tiers. Par exemple, les fréquences 121,5 MHz et 243 MHz sont réservées internationalement comme fréquences de détresse peuvent être utilisées pour des émissions de radiobalises et des émissions-réceptions de communications radio en modulation d'amplitude. D'autres organisations sont susceptibles d'utiliser d'autres bandes de fréquences et d'autres modulations pour leurs besoins propres. Par exemple les systèmes PMR opèrent sur des fréquences attribuées par licences nationales.

Or, une difficulté apparaît pour les forces de secours lorsqu'elles doivent porter assistance à des personnes appartenant à l'une quelconque parmi des centaines d'organisations. Il n'est pas facile en effet de tenir à jour de manière exhaustive une liste prédéfinie des paramètres permettant les communications via les canaux de détresse en mode direct pour les terminaux mobiles de chacune des organisations sur le territoire d'intervention possible.

Un besoin apparaît donc d'une diffusion dynamique desdits paramètres nécessaires pour entrer en communication avec un terminal mobile d'une organisation donnée, par exemple à l'occasion d'une situation de détresse concernant l'un de ses membres.

D'un autre coté, des techniques de localisation de terminaux radio-mobiles sont connues dans l'état de la technique des télécommunications et sont couramment utilisées dans les systèmes de radiocommunications publics ou privés, y compris dans des systèmes PMR existants. La spécification ETSI TS 101 724 "Digital cellular télécommunication system (Phase 2+) Location Services (LCS) Functional description, Stage 2 (3GPP TS 03.71)" en définit les concepts essentiels applicables, à savoir :
- identification de la cellule radio de rattachement (technique dite Cell-Id),
- mesure du temps d'arrivée ou des angles d'arrivée des émissions du terminal mobile au relais de la cellule radio de rattachement et triangulation (techniques dites TOA et AOA),
- mesures de différences de temps d'arrivée entre le terminal mobile et plusieurs relais, et triangulation (technique dite E-OTD), et
- transmission d'information provenant d'un récepteur GPS embarqué dans le terminal mobile (technique dite A-GPS).

Or, une difficulté de ces techniques de localisation est qu'elles supposent que le terminal mobile effectue des transactions en mode relayé. Ces techniques ne sont donc pas applicables pour les systèmes PMR lorsque le terminal mobile à localiser opère en mode direct. Ainsi avec les terminaux mobiles des systèmes PMR de l'état de la technique, la localisation n'est pas possible à tout instant et dépend des services de communication utilisés par l'utilisateur du terminal mobile.

Il existe donc un besoin de localiser un terminal mobile, indépendamment du fait qu'il opère en mode relayé ou en mode direct, aussi bien à proximité qu'en dehors de la couverture radioélectrique du réseau.

Des techniques de localisation d'émetteurs radio sont connues dans le domaine de la goniométrie et sont couramment utilisées dans les systèmes de surveillance du spectre de fréquences, les systèmes de guerre électronique et les systèmes radar pour la localisation d'émetteurs radio. Ces techniques utilisent par exemple des antennes actives par formation de faisceaux ou des antennes passives directives. Elles implémentent des algorithmes basés sur l'amplitude des signaux reçus (par exemple méthode dite Watson Watt avec antennes Adcock) ou basés sur l'interférométrie des signaux reçus déphasés dans un réseau d'antennes, ou encore sur des techniques de corrélation dans le domaine fréquentiel à haute résolution telles que l'algorithme ESPRIT ("Estimation of Signal Parameter by Rotational Invariance Technique") ou l'algorithme MUSIC ("Multiple Source Classification").

Or, la difficulté majeure de ces systèmes lorsqu'ils sont appliqués à la bande de fréquences UHF est qu'ils exigent une instrumentation du terrain à proximité kilométrique des terminaux mobiles à localiser. En outre, les équipements de localisation concernés ne sont pas adaptés à une utilisation civile professionnelle. Autrement dit, ces systèmes ne sont pas déployables de manière économique pour réaliser des localisations sur de larges zones géographiques, de plusieurs centaines de kilomètres de rayon.

Il existe donc un besoin de localiser un terminal mobile à partir d'un serveur de localisation situé à grande distance du théâtre d'opération des terminaux mobiles.

Des techniques de localisation à grande distance d'émetteurs radio terrestres sont également connues dans le contexte aérospatial.

Par exemple, les terminaux de communication directe par satellites peuvent accessoirement intégrer des récepteurs GPS, ce qui permet de transmettre leur localisation à un serveur de localisation distant. Le brevet US 5,982,322 divulgue ainsi un équipement comprenant un récepteur de géolocalisation et un émetteur-récepteur de communication.

Cependant, la transmission de l'information de localisation nécessite au préalable l'établissement d'une communication par l'émetteur-récepteur, pour commander à distance la fonction radiobalise. De plus, le fait d'utiliser de tels équipements n'est pas compatible avec un besoin de localisation à faible coût et faible consommation de batterie. Par ailleurs cela est redondant avec la fonction de communication des systèmes PMR terrestres dans lesquels on souhaite utiliser le dispositif objet de la présente invention.

Des techniques économiques de localisation à grande distance d'émetteurs radio terrestres existent, utilisant par exemple l'effet Doppler perçu par une constellation de satellites défilant au dessus d'un émetteur radiobalise à localiser et/ou utilisant un satellite géostationnaire relayant des messages de localisation GPS. De tels systèmes satellitaires sont utilisés en particulier dans les domaines maritimes et aéronautiques, avec des émetteurs radiobalises dédiés au positionnement. On peut citer en particulier les systèmes ARGOS, qui surveillent la fréquence 401 MHz, et les systèmes COSPAS-SARSAT ("Search And Rescue Satellite-Aided Tracking"), qui surveillent la fréquence 406,025 MHz.

Cependant, on rappelle qu'il est souhaitable que la solution de localisation proposée soit applicable aux terminaux mobiles d'un système de radiocommunications mobiles, par exemple un système PMR, dont l'usage principal n'est pas le positionnement conformément à des standards fréquentiels internationaux, mais les communications sur des fréquences attribuées par licences nationales.

Dit autrement, il est souhaitable de pouvoir entrer en communication avec le terminal mobile localisé.

Or, le système d'alerte par radiolocalisation sur la fréquence COSPAS-SARSAT ne permet pas aux centres de secours d'entrer en communication avec l'émetteur du signal de détresse sur cette fréquence.

En outre, il peut être souhaitable d'établir en communication chiffrée, utilisant une modulation numérique, avec le terminal mobile.

Enfin, il est préférable d'utiliser une plateforme d'émission-réception unique pour les communications et pour la radiolocalisation.

Le brevet US 6,038,438 divulgue un dispositif comprenant un téléphone mobile intégrant une fonction de radiobalise.

L'hypothèse faite dans ce document est que le terminal mobile est associé à une infrastructure de communication fixe (l'exemple du système satellitaire ICO est donné), ce qui permet d'activer à distance la radiobalise intégrée dans le téléphone mobile afin de localiser ledit téléphone mobile lorsqu'il émet un appel de détresse. Or, cette hypothèse d'activation à distance n'est pas applicable aux terminaux mobiles PMR lorsqu'ils opèrent en mode direct.

En outre, les émissions de la radiobalise n'incluent pas d'information concernant l'appel de détresse, puisque la signalisation de l'appel de détresse transite via l'infrastructure fixe. Ceci n'est pas applicable pour un appel de détresse en mode direct dans un terminal mobile d'un système PMR, dont la diversité des paramétrages a été évoquée plus haut.

Par ailleurs, étant donné la grande différence entre les bandes de fréquences utilisées pour les communications satellitaires telles que ICO et les bandes de fréquences allouées aux radiobalises, le partage d'antenne et d'émetteur bi-mode n'est pas possible entre la chaîne d'émission ICO et la radiobalise intégrée.

US 6.275.164, finalement, divulgue un système de radiobalise de détresse, qui permet de communiquer via la chaîne d'émission/réception de la radiobalise en mode direct et qui insère dans le message de détresse des informations supplémentaires telles qu'un numéro d'identification.

L'invention cherche à cumuler les avantages des techniques de radiocommunications, notamment des techniques de radiocommunications numériques professionnelles d'une part, et des techniques de radiolocalisation d'autre part, en utilisant un unique terminal mobile répondant à tout ou partie des besoins exprimés ci-dessus.

A cet effet, l'invention propose un terminal mobile qui comprend :
- une première chaîne d'émission radio et une chaîne de réception radio associée, respectivement adaptées pour émettre et pour recevoir des informations conformément aux spécifications d'un système de radiocommunications mobiles déterminé, à l'intérieur une zone de couverture déterminée, lesdites spécifications prévoyant un service de communication en mode direct ;
- une seconde chaîne d'émission radio adaptée pour émettre, avec une portée excédant ladite zone de couverture, des informations conformément aux spécifications d'un système de radiodiffusion déterminé, lesdites informations permettant de dériver des informations de localisation associées à la position du terminal ;
- une unité de commande adaptée pour, en réponse à une action d'un utilisateur, insérer dans un message transmis par ladite seconde chaîne d'émission radio des valeurs de paramètres dudit système de radiocommunications nécessaires et suffisants pour établir une communication avec le terminal en mode direct via ladite première chaîne d'émission radio et ladite chaîne de réception associée.

Ainsi, l'invention propose un terminal mobile permettant à la fois :
- de le localiser quand bien même il ne communique pas avec une infrastructure réseau d'un système de radiocommunications mobiles ;
- de le localiser à grand distance, quand bien même il est hors de portée radio de tout réseau d'un système de radiocommunications mobiles ; et,
- de permettre à un tiers d'établir une communication avec lui.

D'autres caractéristiques et avantages de l'invention apparaîtront encore à la lecture de la description qui va suivre. Celle-ci est purement illustrative et doit être lue en regard des dessins annexés sur lesquels :
- la figure 1 est un schéma fonctionnel d'un premier mode de réalisation d'un terminal selon la présente invention ;
- la figure 2 est un schéma illustrant une configuration d'utilisation d'un terminal selon la présente invention ;
- la figure 3 est un schéma fonctionnel d'un second mode de réalisation d'un terminal selon la présente invention, correspondant à un terminal bi-bande ; et,
- les figures 4a à 4c sont des chronogrammes illustrant le fonctionnement du terminal selon l'invention.

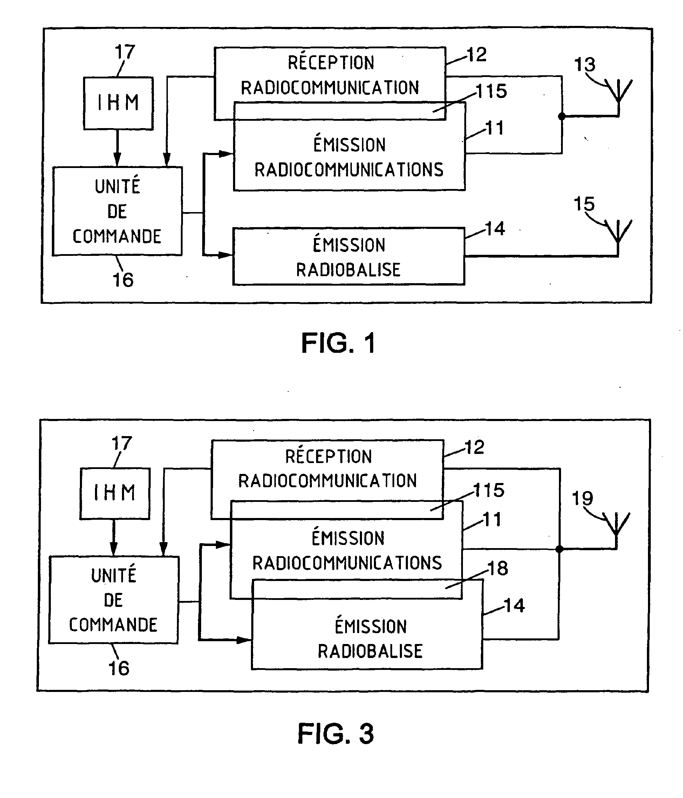

Ainsi qu'il est illustré à la figure 1, le terminal de radiocommunications mobiles comprend une chaîne d'émission radio 11, et une chaîne de réception radio 12 associée à la chaîne 11. Les chaînes 11 et 12 sont respectivement adaptées pour émettre et pour recevoir des informations conformément aux spécifications d'un système de radiocommunications mobiles déterminé, lorsque le terminal mobile se trouve à l'intérieur une zone géographique déterminée correspondant à sa zone de couverture radio.

De façon connue en soi, la chaîne 11 comprend notamment un modulateur, éventuellement un module d'embrouillage, un codeur de canal, un ou plusieurs filtres, un amplificateur de puissance. De même la chaîne 12 comprend notamment un ou plusieurs filtres, un amplificateur, un décodeur de canal, éventuellement un module de désembrouillage, et un démodulateur.

Les chaînes 11 et 12 opèrent sensiblement dans la même bande de fréquence, par exemple la plage 380-407 MHz. Elles possèdent généralement des éléments 115 en commun. C'est pourquoi on peut aussi parler d'une chaîne d'émission/réception de radiocommunications 11,12. On notera que les chaînes 11 et 12 peuvent toutefois opérer dans des canaux radio distincts selon les spécifications du système considéré. En général, les deux chaînes 11 et 12 sont couplées à une même antenne 13, servant à la fois d'antenne d'émission et d'antenne de réception.

Les spécifications du système considéré prévoient un service de communication en mode direct. Dit autrement, le terminal mobile est adapté pour communiquer avec un autre terminal mobile sans passer par l'infrastructure fixe du système de radiocommunications mobiles.

Le système de radiocommunications mobiles peut être un système public ou privé. C'est dans ce dernier cas essentiellement, que l'invention produit ses effets avantageux. Un tel système privé peut en particulier être un système de radiocommunications mobiles professionnelles (PMR), utilisé par exemple par les services de secours.

Le terminal comprend aussi une autre chaîne d'émission radio 14. La chaîne d'émission radio 14 est adaptée pour émettre, avec une portée excédant la zone de couverture radio de la chaîne d'émission radio 11, des messages conformément aux spécifications d'un système de radiodiffusion déterminé. Ces messages comprennent des informations qui permettent à un équipement fixe de dériver des informations de localisation associées à la position géographique du terminal mobile. Un tel équipement fixe est appelé serveur de localisation.

Les paramètres de puissance émise et de modulation de la chaîne d'émission radio 14 peuvent éventuellement être différents de ceux de la chaîne d'émission radio 11.

Le système de radiodiffusion est par exemple un système de radiobalise. Dans un tel système, une fréquence balise est réservée pour les émissions des messages par la chaîne d'émission radio 14. Cette fréquence balise est appelée fréquence de radiolocalisation. Les informations de localisation sont dérivées par des techniques de traitement du signal mises en oeuvre dans l'équipement fixe précité, notamment une technique de triangulation. Il peut s'agir par exemple d'un système de radiolocalisation par satellite.

En variante ou en complément, les informations transmises par la chaîne d'émission radio 14 comprennent directement des informations de localisation fines calculées au niveau du terminal mobile, par exemple par l'intermédiaire d'un système de positionnement passif par satellites, tel que le GPS ou le futur système européen GALILEO ou encore le système LORAN-C.

Dans le mode de réalisation représenté à la figure 1, la chaîne d'émission radio 14 opère dans une bande de fréquence déterminée, distincte de celle dans laquelle opèrent la chaîne d'émission radio 11 et la chaîne de réception radio 12. C'est pourquoi, en général, la chaîne d'émission radio 14 est couplée à une antenne 15 distincte de l'antenne 13.

Enfin, le terminal mobile comprend une unité de commande 16 et une interface homme-machine (IHM) 17. L'unité 16 est adaptée pour être activée par une action d'un utilisateur exercée via l'IHM 17, par exemple le déclenchement d'un appel de détresse par appui sur une touche de détresse ou similaire.

En réponse à cette action de l'utilisateur, l'unité de commande 16 est en outre adaptée pour insérer, dans un message transmis par la chaîne d'émission radio 14, des valeurs de paramètres du système de radiocommunications mobiles. Ces paramètres sont nécessaires et suffisants pour qu'un terminal ad-hoc, mais qui n'appartient pas forcément au même système de radiocommunications mobiles, puisse être configuré pour établir une communication en mode direct avec le terminal mobile, via la chaîne d'émission radio 11 et/ou la chaîne de réception radio 12.

L'unité de commande 16 est par exemple réalisée sous forme logicielle. L'implémentation de l'invention, qui ne requiert qu'une adaptation des terminaux mobiles conventionnels, se ramène donc à une mise à niveau logicielle.

Les paramètres de communication diffusés peuvent inclure un codage des éléments d'information suivants :
- l'identification du système de radiocommunications mobiles ou de la technologie sur laquelle il repose (par exemple TETRA, TETRAPOL, APCO-25 Phase 1 ou 2, ou tout système à modulation analogique) ;
- la fréquence basse de la bande (par exemple 380 MHz) ;
- la largeur de canal du système de radiocommunications mobiles (par exemple 25 kHz, 12,5 kHz, 10 kHz ou 6,25 kHz) ;
- la présence ou l'absence d'un offset fréquentiel dû à la bande de garde de demi-canal (oui ou non) ;
- le numéro de canal dans la bande ; et le cas échéant,
- le code d'embrouillage.

Alternativement, les paramètres diffusés peuvent être un simple identifiant de l'émetteur des signaux, de l'organisation à laquelle il appartient, et/ou de son pays d'origine, lorsque ces paramètres permettent d'obtenir indirectement les paramètres de communication applicables en consultant une base de données prédéfinie.

Le principe de fonctionnement du terminal proposé est donc l'inverse de l'enseignement du brevet US 5,982,322 cité en introduction, dans lequel la connaissance des paramètres de communication applicables est un pré-requis pour la détection du signal de radiolocalisation.

En effet, l'objectif premier d'un système de détection de radiobalises est de localiser une radiobalise émettrice. La localisation d'une radiobalise est typiquement réalisée par un système tiers de radiolocalisation, sans assistance de l'émetteur à localiser. Un système typique de radiolocalisation peut être soit une constellation de satellites (telle que celles utilisées pour les localisations ARGOS ou COSPAS-SARSAT, dont la précision est de l'ordre de 300 mètres), soit un récepteur terrestre de goniométrie distant.

Un tel système effectue la détection et localisation des émissions de messages sur la fréquence radiobalise utilise des triangulations de mesures radio de temps d'arrivée par goniométrie ou des mesures de dérives fréquentielles Doppler des signaux radiobalises. Le fait d'introduire dans les information de radiobalise des paramètres numériques de localisation fine de type GPS ou GALILEO complète les estimations issues des mesures radio par une estimation GPS ou GALIELO plus précise, que les satellites ou les systèmes terrestres distants peuvent retransmettre aux destinataires.

En outre, le fait d'introduire dans les informations de radiobalise des paramètres numériques de localisation fine de type GPS ou GALILEO peut remplacer les estimations issues des mesures radio par une estimation GPS ou GALILEO plus précise, sans effectuer de mesures de goniométrie radio. En particulier, un récepteur ad-hoc, scrutant la fréquence de la radio-balise, peut obtenir la position du terminal émetteur en démodulant et décodant directement les paramètres émis. Ainsi, des paramètres de localisation GPS ou GALILEO transmis par la fonction radiobalise permettent à un tiers de localiser finement l'émetteur des signaux sans besoin de passer par une quelconque infrastructure fixe.

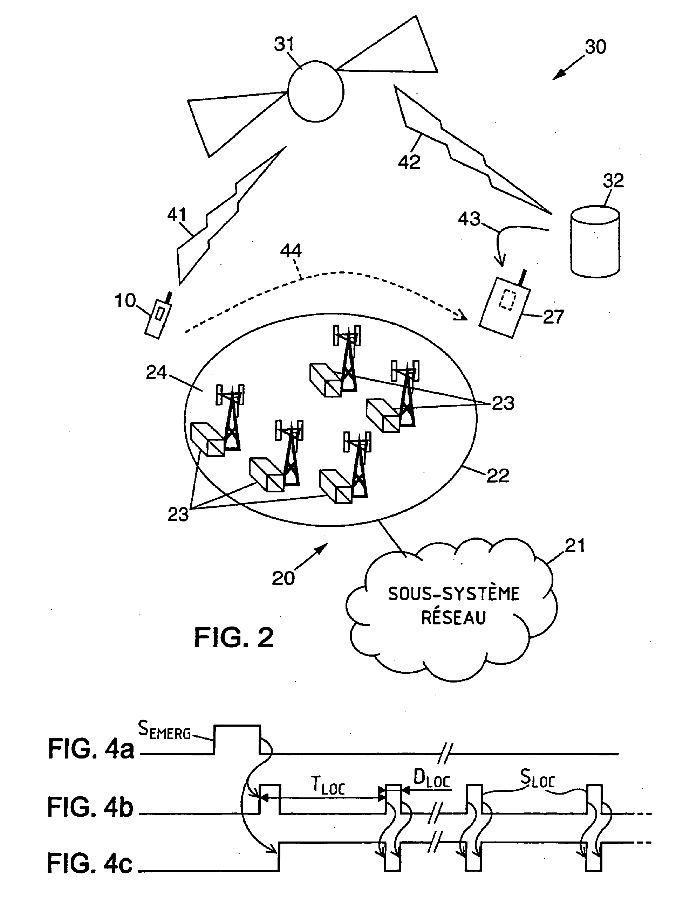

Un scénario d'utilisation du terminal mobile selon l'invention va maintenant être présenté en référence au schéma de la figure 2.

On suppose qu'un utilisateur quelconque possède un tel terminal 10 qui appartient à un système de radiocommunications mobiles 20 déterminé, par exemple un système PMR numérique. Le système 20 comprend une infrastructure fixe avec un sous-système réseau 21 et un sous-système radio 22. Ce dernier comprend par exemple des stations de base 23 réparties sur la zone géographique couverte par le système.

On suppose que l'utilisateur, et donc également son terminal 10, se trouvent à l'extérieur de la zone de couverture radio 24 du réseau du système 20, lorsqu'il émet un appel de détresse en mode direct. Dit autrement, le terminal mobile 10 opère dans une zone isolée d'un point de vue radioélectrique vis-à-vis du système 20, c'est-à-dire sans couverture radioélectrique par l'infrastructure fixe du système 20.

L'appel en mode direct, qui utilise la chaîne d'émission de radiocommunications 11, est donc sans effet s'il n'a y pas d'autres terminaux appartenant au système 20 suffisamment proche pour qu'une communication en mode direct soit établie avec lui.

Néanmoins, le terminal 10 se trouve sous la couverture d'un système de localisation 30 par radiodiffusion, par exemple un système de localisation de radiobalises, typiquement un système du type satellitaire comme ARGOS, COSPAS-SARSAT ou une autre constellation satellitaire.

Le système 30 comprend par exemple au moins un satellite 31 se trouvant en portée radioélectrique avec le terminal mobile 10. Le satellite 31 peut être géostationnaire, ou faire partie d'une constellation de satellites en orbite basse. Le système 30 comprend aussi un équipement fixe 32 correspondant à un serveur de localisation.

Or, l'appel en mode direct déclenche l'envoi d'un message détresse 41 vers le système de localisation 30. On notera que le message 41 est émis, sous la commande de l'unité 16, par la chaîne d'émission de radiobalise 14 du terminal 10 (figure 1).

Après avoir émis l'appel de détresse en mode direct, le terminal 10 s'est placé en mode de réception d'une éventuelle réponse à l'appel de détresse sur un canal de réception radio en mode direct.

Parallèlement, le terminal mobile 10 se met à émettre périodiquement des signaux de radiolocalisation contenant des paramètres d'identification et des paramètres de communication, et optionnellement des paramètres de localisation fine, à l'attention du système de localisation 30. Le système de localisation 30 détecte et localise le terminal mobile 10 et extrait les paramètres.

Une équipe de secours est envoyée en direction du terminal mobile ainsi localisé. L'équipe de secours peut disposer d'un terminal mobile 27, appartenant éventuellement à un autre système PMR que le système 20, lui permettant d'entrer en communication avec le terminal mobile 10 en détresse selon les paramètres reçus de celui-ci.

A cet effet, le système de localisation 30 provoque la transmission 43, à serveur de localisation 32, des paramètres d'identification et des paramètres de communication du terminal mobile 10 au terminal mobile 27 de l'équipe de secours. En variante, les paramètres peuvent être entrés manuellement dans le terminal mobile 27.

Connaissant les paramètres de communication, le terminal mobile 27 de l'équipe de secours peut engager une communication en mode direct avec le terminal mobile 10 de l'utilisateur en détresse, dès que les conditions radioélectriques le permettent, c'est-à-dire dès que l'équipe de secours est assez proche de l'utilisateur pour être dans la zone de couverture radio de son terminal mobile 10 vis à vis du système 20.

Avantageusement, la communication en mode direct entre les terminaux mobiles 10 et 27 peut ainsi avoir lieu bien avant que l'équipe de secours n'atteigne effectivement le terminal mobile localisé. L'équipe de secours peut ainsi s'informer auprès de l'utilisateur de la situation dans laquelle il se trouve. Elle peut ainsi prendre des mesures ou donner des conseils pour anticiper l'assistance à l'utilisateur.

Notons que les fréquences utilisables par les émetteurs de balises de radiolocalisation, par exemple 401 MHz pour les balises ARGOS et 406 MHz pour les balises COSPAS-SARSAT, sont voisines des bandes de fréquences couramment utilisées dans les systèmes PMR. Il est donc possible de réaliser une chaîne d'émission-réception avec une unique antenne qui couvre simultanément des sous-bandes de fréquences en bande PMR et des sous-bandes de fréquences en bande de radiolocalisation.

C'est pourquoi, l'invention prévoit aussi un mode de réalisation du terminal mobile 10 sous la forme d'un terminal large bande (ou bi-bande), lequel est représenté schématiquement à la figure 3. Sur cette figure, les mêmes éléments qu'à la figure 1 portent les mêmes références.

Dans ce mode de réalisation, la chaîne d'émission radio 11 pour les radiocommunications 11 et la chaîne d'émission radio 14 pour la radiolocalisation, comprennent des éléments 18 (matériels) en commun. Ces matériels peuvent fonctionner avec des paramètres éventuellement différents, notamment des paramètres de puissance émise et des paramètres de modulation.

Ce mode de réalisation est avantageux car il permet de diminuer le coût et l'encombrement du terminal mobile 10.

Dans ce mode de réalisation, les paramètres de la technologie du système de radiocommunications 20 qui sont transmis par la chaîne d'émission radio 14 en réponse à l'action de l'utilisateur déclenchant l'appel de détresse, peuvent être moins nombreux. En effet, des paramètres descriptifs des canaux radios utilisables par le terminal pour le service de communication en mode direct peuvent être suffisants. Il en résulte un autre avantage, à savoir que le volume des paramètres à transmettre dans les messages de localisation 41 est réduit.

Ainsi qu'on l'aura compris, dans les deux modes de réalisation présentés ci-dessus, l'unité de commande 16 permet de commander l'émission radio via les chaînes 11 et 14 et la réception radio via la chaîne 12, de telle sorte qu'un terminal mobile 10 en réception sur un canal radio .de mode direct puisse interrompre sa scrutation de ce canal radio pour émettre périodiquement les signaux de radiolocalisation contenant les paramètres.

Dans le cas du mode de réalisation de la figure 3, dans lequel le terminal mobile est doté d'une chaîne d'émission/réception 11,12,14 à large bande, l'unité de commande 16 permet la réception avec scrutation périodique d'un canal de radiocommunications en mode direct pour détecter des signaux modulés correspondant à la réception de données de radiocommunications, et l'émission périodique d'un signal numérique ad-hoc sur la fréquence balise de radiolocalisation.

Sur les chronogrammes des figures 4a, 4b et 4c, on a représenté schématiquement respectivement le signal sur le canal d'émission de radiocommunications en mode direct, les signaux sur la fréquence balise de radiolocalisation, et des fenêtres périodiques de scrutation du canal de réception de radiocommunications en mode direct.

A la figure 4a, on note S_{EMERG} un signal modulé correspondant à l'émission de données de radiocommunications lors de l'appel de détresse.

A la figure 4b, on note S_{LOC} les signaux numériques émis périodiquement sur la fréquence balise de radiolocalisation, à partir de l'émission du signal S_{EMERG}. On note T_{LOC} la période d'émission des signaux de radiolocalisation, et D_{LOC} leur durée d'émission. Le paramètre D_{LOC} est défini pour chaque technologie de localisation. Par exemple, D_{LOC} est typiquement compris entre 435,6 et 525,2 ms pour le système COSPAS-SARSAT à 406 MHz, ainsi qu'il est spécifié dans la norme ETSI EN 300 066. Le paramètre T_{LOC} est défini pour chaque technologie de localisation, par exemple, T_{LOC} est égal à 50 s, à 5% près, pour le système COSPAS-SARSAT.

A la figure 4c, on note W_{SCR} des fenêtres temporelles pendant lesquelles le terminal mobile 10 effectue la scrutation du canal de radiocommunications en mode direct. Ces fenêtres sont périodiques, en étant séparées par des temps morts correspondant à l'émission des signaux de radiobalise S_{LOC}. On observera que la durée d'émission D_{LOC} des signaux de radiobalise S_{LOC}, pendant laquelle la scrutation par le terminal mobile 10 du canal de réception de radiocommunications en mode direct est ainsi interrompue, est compatible avec l'intelligibilité de la communication éventuellement reçue.

On notera que l'émission périodique des signaux de radiolocalisation S_{LOC} peut éventuellement (en particulier dans le mode de réalisation de la figure 3, pour éviter les interférences dans la bande) être interrompue s'il y a réception sur le canal de réception en mode direct, d'un signal de radiocommunications correspondant à un service PMR.

Dans ce qui précède, on a considéré que les paramètres de communication du terminal mobile peuvent être détectés et extraits des émissions de radiobalise par un système de radiolocalisation par radiodiffusion notamment satellitaire, ou par un moyen de radiolocalisation terrestre ad-hoc. Cela n'est cependant pas obligatoire.

A titre de variante, en effet, le terminal mobile 27 de l'équipe de secours peut jouer le rôle du moyen de radiolocalisation terrestre. Dans ce cas, le système de radiolocalisation est par exemple le système GPS, ou le futur système GALILEO, ou encore le système LORAN-C. Le terminal mobile comprend un récepteur de radiolocalisation approprié, c'est-à-dire une chaîne de réception de radiolocalisation.

Le module de commande 16 du terminal mobile 10 est alors adapté pour faire assurer sur la chaîne d'émission/réception large bande ou plus généralement sur les différentes chaînes radio 11, 12 et 14 :
- la réception périodique, via le récepteur de radiolocalisation, d'un signal numérique ad-hoc, par exemple un signal émis par un satellite GPS, sur la fréquence balise du système de radiolocalisation 20. Ce signal permet audit de calculer des informations de localisation fine ;
- l'émission d'un signal périodique 44 (symbolisé par une flèche en trait pointillé à la figure 2) contenant les paramètres de communication du terminal mobile 10 et le informations de localisation fine, avec une puissance telle que la portée radioélectrique peut être supérieure à la couverture radio du terminal mobile 10 vis à vis du système de radiocommunications 20. Cette émission périodique d'informations de radiolocalisation a lieu via la chaîne d'émission de radiolocalisation 14. Elle peut être éventuellement interrompue s'il y a réception d'un signal sur le canal de réception de radiocommunications en mode direct 12.

Le terminal mobile 27 de l'équipe de secours, assure quant à lui :
- la réception du signal 44, et l'extraction de paramètres de radiocommunications et des informations de localisation fine que contient ce signal ;
- l'émission sur la canal d'émission de radiocommunication en mode direct correspondant aux paramètres de communication extraits ; et,
- la scrutation périodique du canal de réception de radiocommunications en mode direct pour détecter des signaux modulés correspondant à l'établissement de la communication avec le terminal mobile 10.

## Revendications

1. Terminal de radiocommunications mobiles (10) comprenant :
- une première chaîne d'émission radio (11) et une chaîne de réception radio associée (12), respectivement adaptées pour émettre et pour recevoir des informations conformément aux spécifications d'un système de radiocommunications mobiles (20) déterminé, lesdites spécifications prévoyant un service de communication en mode direct ;
- une seconde chaîne d'émission radio (14) adaptée pour émettre, avec une portée excédant ladite zone de couverture, des informations conformément aux spécifications d'un système de radiodiffusion (30) déterminé, lesdites informations permettant de dériver des informations de localisation associées à la position du terminal ;
- une unité de commande (16) adaptée pour, en réponse à une action d'un utilisateur, insérer dans un message transmis par ladite seconde chaîne d'émission radio des valeurs de paramètres dudit système de radiocommunications nécessaires et suffisants pour établir une communication avec le terminal en mode direct via ladite première chaîne d'émission radio et ladite chaîne de réception associée.

2. Terminal selon la revendication 1, dans lequel le système de radiodiffusion est un système de radiobalise permettant de dériver les informations de localisation par des techniques de traitement du signal.

3. Terminal selon la revendication 2, dans lequel le système de radiobalise est un système de radiolocalisation par satellite.

4. Terminal selon l'une quelconque des revendications précédentes, dans lequel les informations transmises par la seconde chaîne d'émission radio comprennent des informations de localisation fines obtenues au niveau du terminal.

5. Terminal selon la revendication 4, dans lequel les informations de localisation fines sont obtenues au niveau du terminal par l'intermédiaire d'un système de positionnement passif par satellites.

6. Terminal selon la revendication 5, dans lequel le système de positionnement passif par satellites est le GPS.

7. Terminal selon l'une quelconque des revendications précédentes, dans lequel le système de radiocommunications est une technologie de radiocommunications mobiles professionnelles (PMR).

8. Terminal selon l'une quelconque des revendications précédentes, dans lequel la première chaîne d'émission radio et la seconde chaîne d'émission radio comprennent des éléments (18) en commun.

9. Terminal selon l'une quelconque des revendications précédentes, dans lequel les paramètres de la technologie privée de radiocommunication transmis par la seconde chaîne d'émission radio en réponse à l'action de l'utilisateur, comprennent des paramètres descriptifs des canaux radio utilisables par le terminal.

10. Terminal selon l'une quelconque des revendications précédentes, dans lequel l'action de l'utilisateur est une action de déclenchement d'un appel de détresse en mode direct.

## Claims

1. Mobile radio communications terminal (10) comprising:
- a first radio transmission chain (11) and an associated radio reception chain (12), respectively suitable to transmit and receive data in accordance with the specifications of a determined mobile radio communications system (20), the said specifications providing for a direct mode communication service;
- a second radio transmission chain (14) suitable to transmit, with a range exceeding the said zone of cover, data in accordance with the specifications of a determined radio broadcasting system (30), the said data permitting derivation of position-finding data associated with the position of the terminal;
- a control unit (16) suitable, in response to an action of the user, to insert in a message transmitted by the said second radio transmission chain parameter values of the said radio communications system necessary and sufficient to establish communication with the terminal in direct mode via the said first radio transmission chain and the said associated reception chain.

2. Terminal as described in claim 1, in which the radio broadcasting system is a radio beacon system permitting derivation of position-finding data by signal processing techniques.

3. Terminal as described in claim 2, in which the radio beacon system is a satellite radio position-finding system.

4. Terminal as described in any one of the preceding claims, in which the data transmitted by the second radio transmission chain include fine position-finding data obtained at the terminal.

5. Terminal as described in claim 4, in which the fine position-finding data are obtained at the terminal by means of a passive satellite position-finding system.

6. Terminal as described in claim 5, in which the passive satellite position-finding system is GPS.

7. Terminal as described in any one of the preceding claims, in which the radio communications system is a professional mobile radio communications technology (PMR).

8. Terminal as described in any one of the preceding claims, in which the first radio transmission chain and the second radio transmission chain include elements (18) in common .

9. Terminal as described in any one of the preceding claims, in which the parameters of the private radio communications technology transmitted by the second radio transmission chain in response to the action of the user include parameters descriptive of the radio channels useable by the terminal.

10. Terminal as described in any one of the preceding claims, in which the action of the user is an action of triggering a distress call in direct mode.

## Patentansprüche

1. Mobilfunk-Kommunikationsterminal (10) umfassend:
- eine erste Funksendekette (11) und eine entsprechende Funkempfangskette (12), die jeweils geeignet sind, um Informationen gemäß den Spezifikationen eines bestimmten Mobilfunk-Kommunikationssystems (20) zu senden und zu empfangen, wobei die Spezifikationen einen Direktmodus-Kommunikationsdienst vorsehen,
- eine zweite Funksendekette (14), die mit einer Reichweite, die die Deckungszone überschreitet, Informationen gemäß den Spezifikationen eines bestimmten Funkübertragungssystems (30) senden kann, wobei die Informationen es erlauben, Lokalisierungsinformationen in Zusammenhang mit der Position des Terminals abzuleiten,
- eine Steuereinheit (16), die als Reaktion auf eine Aktion eines Benutzers in eine durch die zweite Funksendekette übertragene Mitteilung Parameterwerte des Funkkommunikationssystems einfügen kann, die erforderlich und ausreichend sind, um eine Kommunikation mit dem Terminal im Direktmodus über die erste Funksendekette und die entsprechende Funkempfangskette herzustellen.

2. Terminal nach Anspruch 1, bei dem das Funksendesystem ein Funkbakensystem ist, das es erlaubt, die Lokalisierungsinformationen durch Signalverarbeitungstechniken abzuleiten.

3. Terminal nach Anspruch 2, bei dem das Funkbakensystem ein Satellitenfunklokalisierungssytem ist.

4. Terminal nach einem der vorhergehenden Ansprüche, bei dem die durch die zweite Funksendekette übertragenen Informationen Feinlokalisierungsinformationen umfassen, die auf der Ebene des Terminals erzielt werden.

5. Terminal nach Anspruch 4, bei dem die Feinlokalisierungsinformationen auf der Ebene des Terminals über ein passives Satellitenpositionierungssystem erzielt werden.

6. Terminal nach Anspruch 5, bei dem das passive Satellitenpositionierungssystem das GPS ist.

7. Terminal nach einem der vorhergehenden Ansprüche, bei dem das Funkkommunikationssystem eine professionelle Mobilfunktechnik (PMR) ist.

8. Terminal nach einem der vorhergehenden Ansprüche, bei dem die erste Funksendekette und die zweite Funksendekette gemeinsame Elemente (18) umfassen.

9. Terminal nach einem der vorhergehenden Ansprüche, bei dem die Parameter der privaten Funkkommunikationstechnik, die von der zweiten Funksendekette als Reaktion auf die Aktion des Benutzers übertragen werden, Parameter umfassen, die die von dem Terminal verwendbaren Funkkanäle beschreiben.

10. Terminal nach einem der vorhergehenden Ansprüche, bei dem die Aktion des Benutzers eine Aktion des Auslösens eines Notrufs im Direktmodus ist.
